# EUROPÄISCHE PATENTANMELDUNG

(11) **EP 4 552 508 A1**
(43) Veröffentlichungstag der Anmeldung: **14.05.2025**
(21) Anmeldenummer: 24210932.0
(22) Anmeldetag: 05.11.2024
(51) Int. Cl.: A23L 2/54, B01F 23/2361, B67D 1/04, G01G 17/04, G01G 17/06

(54) **GETRÄNKESPRUDLER**

(30) Priorität: 10.11.2023 DE 102023211171
(71) Anmelder: Jahn, Andreas, 99897 Tambach-Dietharz (DE)
(72) Erfinder: Jahn, Andreas, 99897 Tambach-Dietharz (DE)
(74) Vertreter: Liedtke & Partner Patentanwälte

(57) **Zusammenfassung**

Die Erfindung betrifft einen Getränkesprudler (1) mit einer Grundeinheit (10), wobei die Grundeinheit (10) aufweist:
- ein Fußteil (11),
- ein Kopfteil (12),
- eine Druckbehälteraufnahme (13) zur Aufnahme eines Druckbehälters (2),
- eine Getränkebehälteraufnahme (14) zur Aufnahme eines Getränkebehälters (3), und
- eine Betätigungseinheit (15) zum Öffnen einer fluidischen Verbindung zwischen dem in der Druckbehälteraufnahme (13) angeordneten Druckbehälter (2) und dem in der Getränkebehälteraufnahme (14) angeordneten Getränkebehälter (3), dadurch gekennzeichnet, dass
- die Grundeinheit (10) eine Wägeeinrichtung (4) aufweist, die zur Ermittlung einer Gewichtskraft und zur Anzeige eines aktuellen Füllstands des Druckbehälters (2) ausgebildet ist,
wobei die Wägeeinrichtung (4) mindestens eine Wägezelle (41) aufweist, die in dem Fußteil (11) und/oder in das Kopfteil (12) eingebracht ist.

## Beschreibung

Die Erfindung betrifft einen Getränkesprudler nach den Merkmalen des Oberbegriffs des Anspruchs 1.

Aus dem Stand der Technik sind Getränkesprudler, auch als Wassersprudler oder Trinkwassersprudler bezeichnet, allgemein bekannt. Sie weisen eine Grundeinheit auf, in welche eine mit Kohlenstoffdioxid befüllte Gaskartusche und eine mit Wasser befüllte Flasche eingesetzt werden. Durch Betätigen einer Betätigungseinheit an der Grundeinheit wird das Kohlenstoffdioxid in die mit Wasser befüllte Flasche eingeleitet, wodurch das Wasser gesprudelt wird.

Der Erfindung liegt die Aufgabe zu Grunde, einen gegenüber dem Stand der Technik verbesserten Getränkesprudler anzugeben.

Die Aufgabe wird erfindungsgemäß gelöst durch einen Getränkesprudler mit den Merkmalen des Anspruchs 1.

Vorteilhafte Ausgestaltungen der Erfindung sind Gegenstand der Unteransprüche.

Ein Getränkesprudler, auch als Wassersprudler oder Trinkwassersprudler bezeichnet, weist eine Grundeinheit auf. Diese Grundeinheit umfasst eine Druckbehälteraufnahme zur Aufnahme eines Druckbehälters, eine Getränkebehälteraufnahme zur Aufnahme eines Getränkebehälters und eine Betätigungseinheit zum Öffnen einer fluidischen Verbindung zwischen dem in der Druckbehälteraufnahme angeordneten Druckbehälter und dem in der Getränkebehälteraufnahme angeordneten Getränkebehälter, wenn beide Behälter in der jeweiligen Aufnahme angeordnet sind. Der Druckbehälter wird auch als Druckgasbehälter, Gaskartusche, Zylinder oder Gaszylinder bezeichnet. Der Getränkebehälter ist insbesondere eine Flasche. Sind ein mit Gas, insbesondere mit Kohlenstoffdioxid, befüllter Druckbehälter und ein mit einem Getränk, insbesondere Wasser, insbesondere Trinkwasser, befüllter Getränkebehälter in der jeweiligen Aufnahme der Grundeinheit angeordnet, kann durch Betätigen der Betätigungseinheit an der Grundeinheit, wodurch die fluidische Verbindung zwischen dem in der Druckbehälteraufnahme angeordneten Druckbehälter und dem in der Getränkebehälteraufnahme angeordneten Getränkebehälter geöffnet wird, das Getränk im Getränkebehälter gesprudelt werden, da dann das Gas aus dem Druckbehälter in den Getränkebehälter einströmt.

Erfindungsgemäß weist die Grundeinheit eine Wägeeinrichtung auf, die zur Ermittlung einer Gewichtskraft und zur Anzeige eines aktuellen Füllstands des Druckbehälters ausgebildet ist.

Die Grundeinheit ist zumindest aus einem Fußteil und einem Kopfteil gebildet. Die Wägeeinrichtung weist mindestens eine Wägezelle auf, die in das Fußteil und/oder in das Kopfteil eingebracht ist. Unter einer Wägezelle wird insbesondere ein Kraftaufnehmer oder ein Kraftsensor verstanden. Die jeweilige Wägezelle wird insbesondere vor Inbetriebnahme kalibriert. Beispielsweise wird die jeweilige Wägezelle auf ein Leergewicht des Getränkesprudlers, insbesondere auf ein Leergewicht des Getränkesprudlers mit einem montierten leeren Druckbehälter, kalibriert.

Der Druckbehälter enthält einen Vorrat an Kohlenstoffdioxid, das zum Sprudeln benötigt wird, größtenteils in flüssigem Zustand und nur zu einem ganz geringen Anteil in gasförmigem Zustand. Dadurch herrscht in dem Druckbehälter bis nahezu zum Ende der Entleerung ein annähernd gleichbleibender Druck, so dass der darin vorhandene Füllstand, das heißt die noch im Druckbehälter vorhandene Restmenge von Kohlenstoffdioxid, über den Druck im Druckbehälter nicht genau genug bestimmt werden kann. Weiterhin kann der Nutzer nicht erkennen, wann der Vorrat an Kohlenstoffdioxid im Druckbehälter aufgebraucht ist.

Der mit Kohlenstoffdioxid vollgefüllte Druckbehälter weist jedoch ein signifikant höheres Gewicht auf als ein leerer Druckbehälter und dieses Gewicht nimmt proportional zur entnommenen Gasmenge ab. Handelsübliche Druckbehälter können beispielsweise ungefüllt ein Gewicht von 790 Gramm haben. Vollständig gefüllt kann der Druckbehälter beispielsweise 425 Gramm Kohlenstoffdioxid enthalten. Der vollständig gefüllte Druckbehälter kann in diesem Beispiel daher ein Gesamtgewicht von 1.215 Gramm haben. Das Gewicht der Füllung kann je nach Abfüller leicht schwanken. Mit jeder Entnahme von Kohlenstoffdioxid aus dem Druckbehälter sinkt sukzessive der Füllstand im Druckbehälter und gleichzeitig nimmt das Gewicht des Druckbehälters, einschließlich der darin verbliebenen Restmenge von Kohlenstoffdioxid ab.

Diese Erkenntnis macht sich die vorliegende Erfindung zunutze, indem bei dem vorgeschlagenen Getränkesprudler eine Wägeeinrichtung vorgesehen ist, die zur Ermittlung einer Gewichtskraft und zur Anzeige eines aktuellen Füllstands des Druckbehälters ausgebildet ist. Mit anderen Worten wird der Getränkesprudler zur Ermittlung einer Gewichtskraft ausgebildet und aus einer Änderung der Gewichtskraft die noch vorhandene Restmenge an Kohlenstoffdioxid ermittelt oder geschätzt und für den Nutzer visualisiert. Die "Anzeige eines aktuellen Füllstands des Druckbehälters" braucht hierfür nicht in einer genauen Angabe des tatsächlichen Gewichts zu bestehen. Von dem Begriff "Anzeige eines aktuellen Füllstands des Druckbehälters" soll vielmehr jede visuell wahrnehmbare Darstellung umfasst sein, aus der der Nutzer auf den Füllstand im Druckbehälter schließen kann, so dass beispielsweise rechtzeitig erkannt werden kann, dass die vorhandene Restmenge von Kohlenstoffdioxid demnächst zur Neige geht, so dass der Nutzer rechtzeitig für Ersatz sorgen kann.

In einer besonders einfachen, robusten und preiswerten Ausgestaltung ist die Wägeeinrichtung rein mechanisch aufgebaut. Dazu kann die Wägeeinrichtung beispielsweise mindestens ein Federelement sowie eine mit dem Federelement wirkverbundene Anzeigeeinrichtung aufweisen. So kann das Federelement beispielsweise an oder in dem Getränkesprudler so angeordnet sein, dass das Gewicht des Druckbehälters auf das Federelement einwirkt und dieses dadurch verformt, und die Anzeigeeinrichtung kann beispielsweise ein Zeigerelement umfassen, das für einen Nutzer von außen sichtbar ist und das bei einer Verformung des Federelements bewegt wird. Das Zeigerelement kann dabei beispielsweise translatorisch entlang einer linearen Skala bewegt werden, beispielsweise wenn das Zeigerelement direkt an dem Federelement befestigt ist. Alternativ kann das Zeigerelement rotatorisch bewegt werden, beispielsweise über ein einfaches Umlenkgetriebe, wobei beispielsweise eine kreisförmige oder kreissegmentförmige Skala vorgesehen sein kann, auf der das Zeigerelement den aktuellen Füllstand des Druckbehälters anzeigt.

In anderen Ausgestaltungen kann die Wägeeinrichtung elektromechanisch oder rein elektrisch/elektronisch aufgebaut sein.

In einer vorteilhaften Ausgestaltung weist die Wägeeinrichtung mindestens eine Wägezelle, eine mit der Wägezelle verbundene Auswerteelektronik sowie eine mit der Auswerteelektronik verbundene Anzeigeeinrichtung auf. Wägezellen sind Kraftaufnehmer, die einen Federkörper umfassen, der sich unter Einwirkung des Gewichts elastisch verformt. Gemeinsam mit dem Federkörper verformen sich Dehnungsmessstreifen, die fest mit dem Federkörper verbunden sind und deren elektrischer Widerstand sich bei dieser Verformung ändert. Eine Auswerteelektronik kann beispielsweise eine Energiequelle, eine Brückenschaltung zur Messung der Widerstandsänderung der Dehnungsmessstreifen sowie eine Treiberschaltung zur Ansteuerung einer Anzeigeeinrichtung umfassen. Eine Anzeigeeinrichtung kann entweder zur Anzeige eines quantitativen oder eines qualitativen Anzeigewerts ausgebildet sein.

Die Anzeigeeinrichtung ist insbesondere sichtbar auf einer Oberseite des Fußteils angeordnet. Die mindestens eine Wägezelle ist auf einer Unterseite des Fußteils angeordnet. Die mindestens eine Wägezelle ist geschützt auf der Unterseite des Fußteils, zum Beispiel in einen Standfuß, eingebracht. Alternativ oder zusätzlich kann die mindestens eine Wägezelle in eine der Druckbehälteraufnahmen am Kopfteil integriert, insbesondere geschützt, angeordnet sein. Beispielsweise kann die mindestens eine Wägezelle in die Druckbehälteraufnahme am Kopfteil oder am Fußteil integriert, insbesondere geschützt, angeordnet sein.

Zur Anzeige quantitativer Anzeigewerte, also beispielsweise eines Gewichts oder eines Prozentsatzes der verbleibenden Restmenge von Kohlenstoffdioxid, eignen sich analoge Anzeigeinstrumente wie Drehspulmesswerke in Form von Zeigerinstrumenten, aber auch digitale Anzeigeinstrumente wie elektronische oder elektromechanische Segmentanzeigen, LCD-, LED- oder e-Ink-Anzeigen, die in der Lage sind, wechselnde Ziffernfolgen anzuzeigen.

Zur Anzeige qualitativer Anzeigewerte, also beispielsweise eines Schätzwerts, der dem Nutzer lediglich eine grobe Abschätzung der verbleibenden Restmenge von Kohlenstoffdioxid ermöglicht, eignen sich Anzeigeeinrichtungen, die nur eine begrenzte Anzahl unterschiedlicher Signale ausgeben können, wie beispielsweise ein mehrfarbiges Leuchtinstrument, das beispielhaft nur drei verschiedenfarbige LEDs aufweist und dementsprechend nur drei verschiedene Lichtfarben erzeugen kann, beispielsweise in intuitiver Weise nach Art einer Ampel mit den Farbwerten "grün" für "mehr als zwei Drittel gefüllt", "gelb" für "mehr als ein Drittel gefüllt" und "rot" für "weniger als ein Drittel gefüllt". Weitere Ausgestaltungen können vorsehen, dass die Anzeigeeinrichtung eine Balkenanzeige, beispielsweise ein LED-Leuchtband umfasst, dessen leuchtende Länge sich mit dem Füllstand des Druckbehälters verringert, oder eine Anordnung diskreter LEDs, wobei die Zahl leuchtender LEDs ebenfalls mit dem Füllstand des Druckbehälters abnimmt, und so weiter.

Bei Getränkesprudlern, deren Grundeinheit mindestens einen Standfuß aufweist, kann vorgesehen sein, dass die mindestens eine Wägezelle in einen Standfuß integriert ist. Hiervon sind auch Ausgestaltungen umfasst, bei denen Wägezellen in zwei oder mehr Standfüße integriert sind. Sind mehrere Wägezellen integriert, so ist einerseits eine Mittelung der Messwerte für eine höhere Messgenauigkeit möglich und andererseits wird damit eine Redundanz geschaffen, die die Funktionsfähigkeit der Wägeeinrichtung auch dann sicherstellt, wenn eine Wägezelle defekt werden und ausfallen sollte. Sind eine oder mehrere Wägezellen in einen oder mehrere Standfüße des Getränkesprudlers integriert, so ist das Gewicht des gesamten Getränkesprudlers die Grundlage der erfindungsgemäßen Füllstandsanzeige. Da sich das Gesamtgewicht jedoch mit abnehmender Restmenge des im Druckbehälter vorhandenen Kohlenstoffdioxids ebenso ändert wie das Gewicht des Druckbehälters, ist lediglich bei einer quantitativen Anzeige des Füllstandes für eine entsprechende Tarierung der Wägeeinrichtung Sorge zu tragen, die problemlos in der Auswerteelektronik erfolgen kann.

Alternativ kann die mindestens eine Wägezelle in die Druckbehälteraufnahme integriert sein. Auch bei dieser Ausgestaltung ist es prinzipiell möglich, dass mehrere Wägezellen integriert sind, um eine Mittelung der Messwerte für eine höhere Messgenauigkeit zu ermöglichen beziehungsweise Redundanz für den Ausfall einer Wägezelle zu schaffen. Die Ausgestaltung mit der Integration der Wägezelle in die Druckbehälteraufnahme ist besonders vorteilhaft bei Getränkesprudlern anwendbar, bei denen der Druckbehälter hängend in der Druckbehälteraufnahme angeordnet ist, so dass die Wägezelle nur das Gewicht des Druckbehälters erfasst und zur Grundlage der Füllstandsanzeige macht.

Besonders vorteilhaft kann bei dem vorgeschlagenen Getränkesprudler vorgesehen sein, dass die Wägeeinrichtung eine drahtlose Kommunikationsschnittstelle, beispielsweise eine WLAN- oder Bluetooth-Schnittstelle aufweist, die eine Kommunikation mit anderen Geräten, wie beispielsweise Smartphones, ermöglicht, so dass ein Nutzer sich den Füllstand des Druckbehälters beispielsweise in einer auf dem Smartphone installierten App anzeigen lassen kann.

Um Energie zu sparen, kann in einer vorteilhaften Ausgestaltung des vorgeschlagenen Getränkesprudlers vorgesehen sein, dass die Wägeeinrichtung dazu ausgebildet ist, so lange inaktiv zu sein, bis eine Benutzeraktion erfolgt. Die Wägeeinrichtung kann dabei in einem energiesparenden Standby-Modus sein, aus dem sie durch eine Benutzeraktion "geweckt" wird. In dem Standby-Modus kann die Anzeigeeinrichtung ausgeschaltet sein und das "Wecken" kann beispielsweise dadurch erfolgen, dass der Getränkesprudler benutzt wird und dadurch die Wägezelle eine Gewichtsänderung detektiert, oder dadurch, dass ein dafür an dem Getränkesprudler vorgesehener Schalter betätigt wird, oder dadurch, dass ein Benutzer in einer Smartphone-App den Füllstand abfragt und das in dem Getränkesprudler empfangene Abfragesignal das "Wecken" auslöst.

Um mögliches Fehlverhalten der Wägeeinrichtung zu korrigieren, das im Laufe der Zeit auftreten kann, kann in einer vorteilhaften Ausgestaltung des vorgeschlagenen Getränkesprudlers vorgesehen sein, dass die Wägeeinrichtung dazu ausgebildet ist, durch eine Benutzeraktion auf mindestens einen Kalibrierwert, insbesondere einen festgelegten Messwert für das Gewicht des leeren oder unbelasteten Getränkesprudlers, wie einen sogenannten Tara-Wert oder Offset-Wert, gesetzt zu werden. In solchen Fällen kann es sinnvoll sein, bei ansonsten unbelastetem Gerät die Wägeeinrichtung neu zu kalibrieren, indem der Auswerteelektronik signalisiert wird, dass in der Druckbehälteraufnahme gerade kein Druckbehälter vorhanden ist, oder/und dass ein leerer Behälter vorhanden ist, oder/und dass ein voller Behälter vorhanden ist. Diese Kalibrierung kann beispielsweise dadurch erfolgen, dass ein dafür an dem Getränkesprudler vorgesehener Schalter betätigt wird, oder dadurch, dass ein Benutzer in einer Smartphone-App eine Kalibrierung startet und ein in der Auswerteelektronik empfangenes Kalibriersignal die entsprechende Information überträgt, oder selbsttätig, beispielsweise zeitgesteuert in festgelegten Intervallen, durch die Auswerteelektronik.

Darüber hinaus kann die Grundeinheit einteilig oder einstückig aus dem Fußteil und Kopfteil als ein Formbauteil ausgebildet sein. Alternativ kann die Grundeinheit mehrteilig ausgebildet sein. Insbesondere kann die Grundeinheit aus dem separaten Fußteil und dem separaten Kopfteil gebildet sein. Dabei kann der Druckbehälter vertikal stehend zwischen dem Fußteil und dem Kopfteil angeordnet und lösbar zwischen dem Fußteil und dem Kopfteil gehalten und aus der Grundeinheit entnehmbar sein.

Ausführungsbeispiele der Erfindung werden im Folgenden anhand von Zeichnungen näher erläutert.

Darin zeigen:
- Figur 1: einen Getränkesprudler gemäß eines ersten Ausführungsbeispiels in einer perspektivischen Ansicht von unten,
- Figur 2: den Getränkesprudler gemäß des ersten Ausführungsbeispiels in einer perspektivischen Ansicht von oben,
- Figur 3: einen Getränkesprudler gemäß eines zweiten Ausführungsbeispiels in einer perspektivischen Ansicht von oben,
- Figur 4: einen Getränkesprudler gemäß eines dritten Ausführungsbeispiels in einer perspektivischen Ansicht von oben, und
- Figur 5: einen Getränkesprudler gemäß eines vierten Ausführungsbeispiels in einer perspektivischen Ansicht von oben.

Einander entsprechende Teile sind in allen Figuren mit den gleichen Bezugszeichen versehen.

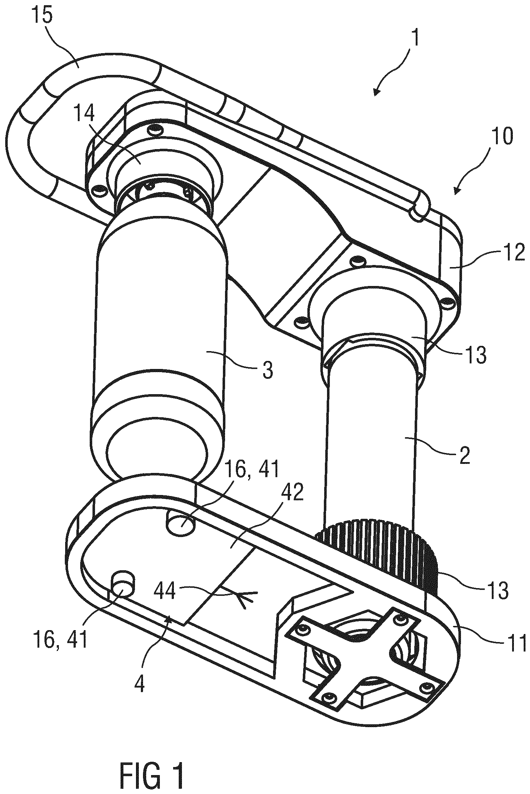

Bei allen in den **Figuren 1 bis 5** gezeigten Ausführungsbeispielen weist der Getränkesprudler 1, auch als Wassersprudler oder Trinkwassersprudler bezeichnet, eine Grundeinheit 10 auf, die ein Fußteil 11 und ein Kopfteil 12 umfasst. Das Fußteil 11 und das Kopfteil 12 können separate Bauteile oder separate Komponenten sein. Alternativ können das Fußteil 11 und das Kopfteil 12 über einen nicht dargestellten Steg miteinander verbunden sein und eine einstückige oder einteilige Grundeinheit 10 bilden.

Das Fußteil 11 und das Kopfteil 12 weisen je eine Druckbehälteraufnahme 13 zur Aufnahme eines Druckbehälters 2 auf. Der Druckbehälter 2 ist vertikal ausgerichtet zwischen dem Fußteil 11 und dem Kopfteil 12 einbringbar und angeordnet. Dabei wird der Druckbehälter 2 zwischen dem Fußteil 11 und dem Kopfteil 12 in der jeweiligen Druckbehälteraufnahme 13 ortsfest gehalten.

Das Kopfteil 12 weist außerdem eine Getränkebehälteraufnahme 14 zur Aufnahme eines Getränkebehälters 3 und eine Betätigungseinheit 15 zum Öffnen einer fluidischen Verbindung zwischen dem in den beiden Druckbehälteraufnahmen 13 von Fußteil 11 und Kopfteil 12 angeordneten Druckbehälter 2 und dem in der Getränkebehälteraufnahme 14 des Kopfteils 12 angeordneten Getränkebehälter 3 auf. Der Druckbehälter 2 wird auch als Druckgasbehälter, Gaskartusche, Zylinder oder Gaszylinder bezeichnet. Der Getränkebehälter 3 ist insbesondere eine Flasche.

**Figur 1** zeigt eine perspektivische Ansicht eines Getränkesprudlers 1 gemäß eines ersten Ausführungsbeispiels von unten. In diesem Ausführungsbeispiel sind Bestandteile einer Wägeeinrichtung 4 an der Unterseite des Fußteils 11 angebracht. Namentlich weist die Unterseite des Fußteils 11 zwei Standfüße 16 auf, in die je eine Wägezelle 41 integriert ist. Die Standfüße 16 mit den Wägezellen 41 sind an einem Gehäuse des Fußteils 11 oder direkt an dem Fußteil 11 befestigt, in welchem eine (hier nicht sichtbare) Auswerteelektronik angeordnet ist, welche mit den Wägezellen 41 in kommunizierender Verbindung steht. Konkret sind die Wägezellen 41 durch die Auswerteelektronik 42 elektrisch kontaktiert, so dass eine messtechnische Erfassung von Krafteinwirkungen auf die Wägezellen 41 möglich ist. Die Auswerteelektronik 42 ist dazu eingerichtet, aus dem von den Wägezellen 41 empfangenen Messsignalen einen für den aktuellen Füllstand des Druckbehälters 2 repräsentativen Anzeigewert oder ein zur Erzeugung eines derartigen Anzeigewerts geeignetes Signal zu erzeugen und diesen Anzeigewert oder dieses Signal an eine (hier nicht sichtbare) Anzeigeeinrichtung 43 zu übertragen, so dass die Anzeigeeinrichtung 43 diesen Anzeigewert visuell ausgeben kann.

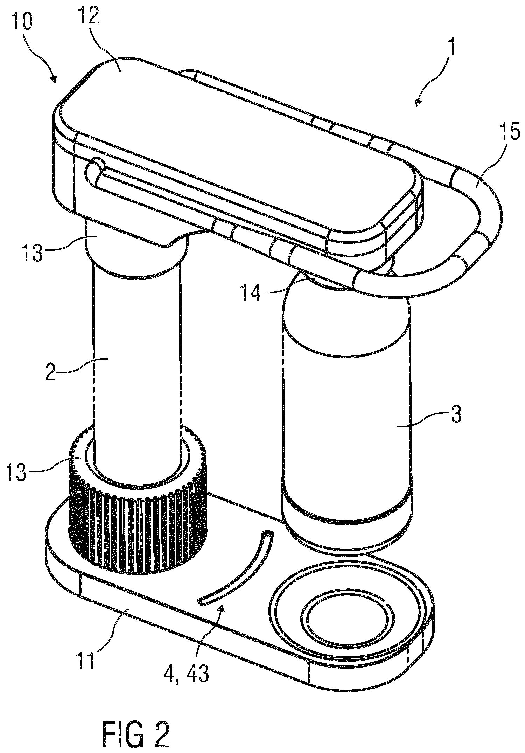

Die Anzeigeeinrichtung 43 der Wägeeinrichtung 4 des Getränkesprudlers 1 des ersten Ausführungsbeispiels ist in **Figur 2** gezeigt. Sie ist ausgeführt als eine an der Oberseite des Fußteils 11 angeordnete Anzeige. Die Anzeigeeinrichtung 43 ist beispielsweise als eine gekrümmte Balkenanzeige ausgebildet, die beispielsweise ein unter einer insbesondere opaken Abdeckung angeordnetes LED-Leuchtband umfasst, dessen leuchtende Länge sich mit dem Füllstand des Druckbehälters 2 verringert.

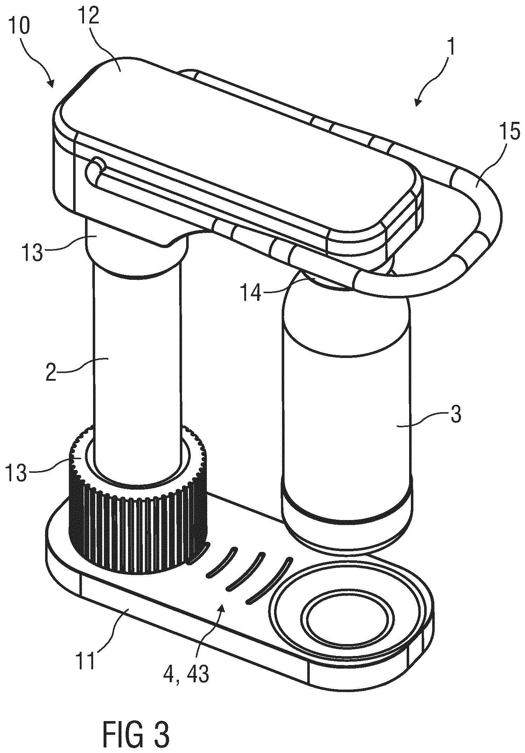

Verschiedene andere geeignete Anzeigeeinrichtungen 43 sind in den **Figuren 3 bis 5** dargestellt.

**Figur 3** zeigt eine perspektivische Ansicht eines Getränkesprudlers 1 gemäß eines zweiten Ausführungsbeispiels von oben. In diesem Ausführungsbeispiel ist die Anzeigeeinrichtung 43 der Wägeeinrichtung 4 des Getränkesprudlers 1 ausgeführt als eine Anordnung diskreter LED-Leuchtbänder, die außerdem unterschiedliche Längen aufweisen, wobei die Zahl leuchtender LED-Bänder mit dem Füllstand des Druckbehälters 2 abnimmt und jedes verbleibende LED-Leuchtband kürzer ist als das unmittelbar vorher aufgrund des geringer werdenden Füllstands erloschene LED-Leuchtband.

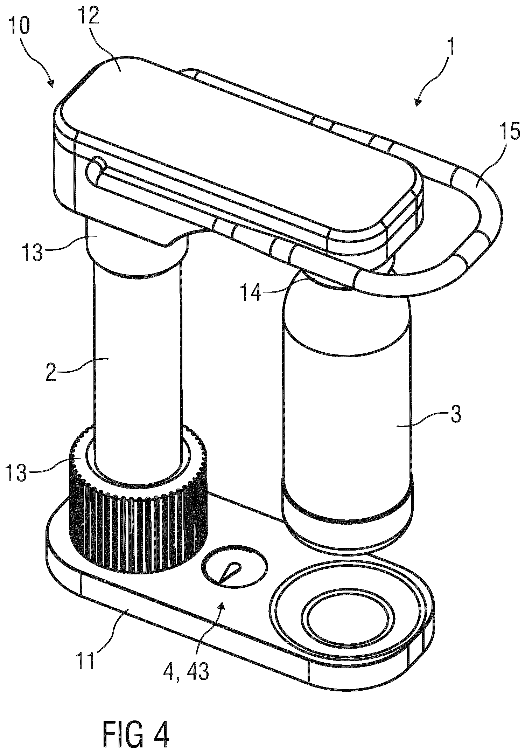

**Figur 4** zeigt eine perspektivische Ansicht eines Getränkesprudlers 1 gemäß eines dritten Ausführungsbeispiels von oben. In diesem Ausführungsbeispiel ist die Anzeigeeinrichtung 43 der Wägeeinrichtung 4 des Getränkesprudlers 1 ausgeführt als analoges Zeigerelement, das sehr anschaulich durch einen Zeiger den aktuellen Füllstand des Druckbehälters 2 zwischen einer Maximum-Markierung und einer Minimum-Markierung anzeigt.

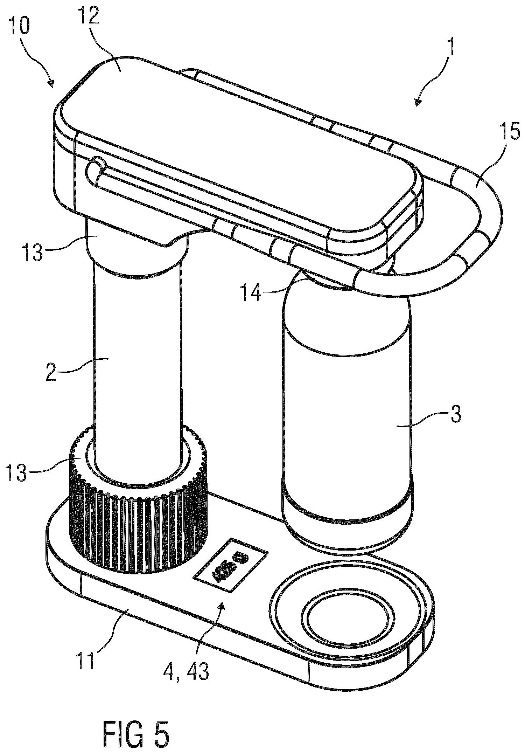

**Figur 5** zeigt eine perspektivische Ansicht eines Getränkesprudlers 1 gemäß eines vierten Ausführungsbeispiels von oben. In diesem Ausführungsbeispiel ist die Anzeigeeinrichtung 43 der Wägeeinrichtung 4 des Getränkesprudlers 1 ausgeführt als digitale LCD-Anzeige, die den absoluten Wert der Restmenge des in dem Druckbehälter 2 verbliebenen Kohlenstoffdioxids anzeigt.

### BEZUGSZEICHENLISTE

- 1: Getränkesprudler
- 10: Grundeinheit
- 11: Fußteil
- 12: Kopfteil
- 13: Druckbehälteraufnahme
- 14: Getränkebehälteraufnahme
- 15: Betätigungseinheit
- 16: Standfuß
- 2: Druckbehälter
- 3: Getränkebehälter
- 4: Wägeeinrichtung
- 41: Wägezelle
- 42: Auswerteelektronik
- 43: Anzeigeeinrichtung
- 44: drahtlose Kommunikationsschnittstelle

## Patentansprüche

1. Getränkesprudler (1) mit einer Grundeinheit (10), wobei die Grundeinheit (10) aufweist:
- ein Fußteil (11),
- ein Kopfteil (12),
- eine Druckbehälteraufnahme (13) zur Aufnahme eines Druckbehälters (2),
- eine Getränkebehälteraufnahme (14) zur Aufnahme eines Getränkebehälters (3), und
- eine Betätigungseinheit (15) zum Öffnen einer fluidischen Verbindung zwischen dem in der Druckbehälteraufnahme (13) angeordneten Druckbehälter (2) und dem in der Getränkebehälteraufnahme (14) angeordneten Getränkebehälter (3),
**dadurch gekennzeichnet, dass**
- die Grundeinheit (10) eine Wägeeinrichtung (4) aufweist, die zur Ermittlung einer Gewichtskraft und zur Anzeige eines aktuellen Füllstands des Druckbehälters (2) ausgebildet ist,
wobei die Wägeeinrichtung (4) mindestens eine Wägezelle (41) aufweist, die in das Fußteil (11) und/oder in das Kopfteil (12) eingebracht ist.

2. Getränkesprudler (1) nach Anspruch 1,
**dadurch gekennzeichnet, dass** die Wägeeinrichtung (4) rein mechanisch aufgebaut ist.

3. Getränkesprudler (1) nach Anspruch 1,
**dadurch gekennzeichnet, dass** die Wägeeinrichtung (4) elektromechanisch oder rein elektronisch aufgebaut ist.

4. Getränkesprudler (1) nach Anspruch 3,
**dadurch gekennzeichnet, dass** die Wägeeinrichtung (4) eine mit der Wägezelle (41) verbundene Auswerteelektronik (42) sowie eine mit der Auswerteelektronik (42) verbundene Anzeigeeinrichtung (43) aufweist.

5. Getränkesprudler (1) nach Anspruch 4,
**dadurch gekennzeichnet, dass** die Wägeeinrichtung (4) mindestens zwei Wägezellen (41) umfasst, deren Messwerte durch die Auswerteelektronik (42) gemittelt werden.

6. Getränkesprudler (1) nach Anspruch 4 oder 5,
**dadurch gekennzeichnet, dass** die Anzeigeeinrichtung (43) auf einer Oberseite des Fußteils (11) sichtbar angeordnet ist.

7. Getränkesprudler (1) nach einem der vorhergehenden Ansprüche,
**dadurch gekennzeichnet, dass** die mindestens eine Wägezelle (41) auf einer Unterseite des Fußteils (11) angeordnet ist.

8. Getränkesprudler (1) nach einem der vorhergehenden Ansprüche,
**dadurch gekennzeichnet, dass** das Fußteil (11) mindestens einen Standfuß (16) aufweist und die mindestens eine Wägezelle (41) in den Standfuß (16) eingebracht ist.

9. Getränkesprudler (1) nach einem der vorhergehenden Ansprüche,
**dadurch gekennzeichnet, dass** die Druckbehälteraufnahme (13) am Kopfteil (12) und/oder am Fußteil (11) angeordnet ist und die mindestens eine Wägezelle (41) in mindestens einer der Druckbehälteraufnahmen (13) eingebracht ist.

10. Getränkesprudler (1) nach einem der vorhergehenden Ansprüche,
**dadurch gekennzeichnet, dass** die Wägeeinrichtung (4) dazu ausgebildet ist, so lange inaktiv zu sein, bis eine Benutzeraktion erfolgt.

11. Getränkesprudler (1) nach einem der vorhergehenden Ansprüche,
**dadurch gekennzeichnet, dass** die Wägeeinrichtung (4) dazu ausgebildet ist, durch eine Benutzeraktion auf mindestens einen festgelegten Kalibrierwert gesetzt zu werden.

12. Getränkesprudler (1) nach einem der Ansprüche 4 bis 9,
**dadurch gekennzeichnet, dass** die Anzeigeeinrichtung (43) zur Anzeige eines quantitativen Anzeigewerts ausgebildet ist.

13. Getränkesprudler (1) nach einem der Ansprüche 4 bis 10,
**dadurch gekennzeichnet, dass** die Anzeigeeinrichtung (43) zur Anzeige eines qualitativen Anzeigewerts ausgebildet ist.

14. Getränkesprudler (1) nach einem der vorhergehenden Ansprüche,
**dadurch gekennzeichnet, dass** die Wägeeinrichtung (4) eine drahtlose Kommunikationsschnittstelle (44) aufweist.

15. Getränkesprudler (1) nach einem der vorhergehenden Ansprüche,
**dadurch gekennzeichnet, dass** die Grundeinheit (10) mehrteilig ausgebildet ist und mindestens aus dem separaten Fußteil (11) und dem separaten Kopfteil (12) gebildet ist.
